# EUROPÄISCHE PATENTSCHRIFT

(11) **EP 0 686 834 B1**
(45) Veröffentlichungstag und Bekanntmachung des Hinweises auf die Patenterteilung: **17.03.1999**
(21) Anmeldenummer: 95108009.2
(22) Anmeldetag: 24.05.1995
(51) Int. Cl.: G01F 23/296

(54) **Anordnung zur Feststellung und/oder Überwachung eines vorbestimmten Füllstands in einem Behälter**
Device for determining and/or monitoring of a predetermined level in a container
Dispositif pour la détermination et/ou la surveillance d'un niveau prédéterminé dans un réservoir

(30) Priorität: 03.06.1994 DE 4419617
(43) Veröffentlichungstag der Anmeldung: 13.12.1995
(73) Patentinhaber: ENDRESS + HAUSER GMBH + CO., D-79689 Maulburg (DE)
(72) Erfinder: Dreyer, Volker, D-69541 Lörrach (DE); Strütt, Bernd, D-79585 Steinen (DE)
(74) Vertreter: Leiser, Gottfried, Dipl.-Ing.

(56) Entgegenhaltungen:
- FR-A- 2 553 189

## Beschreibung

Die Erfindung betrifft eine Anordnung zur Feststellung und/oder Überwachung eines vorbestimmten Füllstands in einem Behälter mit Hilfe eines Füllstandssensors, der ein mechanisches Schwingsystem, einen elektromechanischen Erregungswandler und wenigstens einen elektromechanischen Empfangswandler enthält, wobei das mechanische Schwingsystem auf der Höhe des vorbestimmten Füllstands so angebracht ist, daß es mit dem Füllgut in Berührung kommt, wenn dieses den vorbestimmten Füllstand erreicht, und wobei der Empfangswandler mit dem Eingang eines ersten Schaltungskanals verbunden ist, der eine Verstärkerschaltung enthält, deren Ausgang mit dem Erregungswandler verbunden ist und die so ausgebildet ist, daß das mechanische Schwingsystem zu Schwingungen mit seiner Eigenresonanzfrequenz erregt wird, und mit einem Auswertegerät zur Auslösung von Anzeige- und/oder Schaltvorgängen in Abhängigkeit von der Frequenz des Ausgangssignals der Verstärkerschaltung, wobei der Schaltungskanal ferner einen Meßsignalwandler enthält, der ein zur Übertragung zu dem Auswertegerät geeignetes Meßsignal erzeugt, das die Information über die Frequenz des Ausgangssignals der Verstärkerschaltung enthält.

Eine Anordnung dieser Art ist aus der DE-OS 33 36 991 bekannt, wobei das mechanische Schwingsystem zwei an einer Membran befestigte Schwingstäbe aufweist, die in gegensinnige Schwingungen versetzt werden. Wenn das Schwingsystem in Luft schwingt, hat es eine höhere Eigenresonanzfrequenz als wenn es mit dem Füllgut in Berührung steht. Diese Erscheinung wird zur Feststellung und/oder Überwachung des vorbestimmten Füllstands ausgenutzt. Das Auswertegerät vergleicht die Augenblicksfrequenz des Ausgangssignals der Verstärkerschaltung, die ja stets gleich der momentanen Eigenresonanzfrequenz des mechanischen Schwingsystems ist, mit einer Nennfrequenz, die gleich der Eigenresonanzfrequenz ist, die das Schwingsystem hat, wenn es in Luft schwingt, und die beispielsweise bei der Herstellung oder beim Einbau des Füllstandssensors aufgenommen wird. Wenn diese Augenblicksfrequenz um mehr als einen vorbestimmten Differenzbetrag niedriger als die Nennfrequenz ist, wird angenommen, daß das mechanische Schwingsystem mit dem Füllgut in Berührung steht, während im anderen Fall angenommen wird, daß das mechanische Schwingsystem in Luft schwingt. Bei der Überwachung eines maximalen Füllstands (Überfüllsicherung) bedeutet der erste Fall, daß der zu überwachende Füllstand im Behälter erreicht oder überschritten ist, und der zweite Fall, daß der zu überwachende Füllstand im Behälter noch nicht erreicht ist. Bei der Überwachung eines minimalen Füllstands bedeutet dagegen der erste Fall, daß der zu überwachende Füllstand im Behälter noch nicht erreicht ist, und der zweite Fall, daß der zu überwachende Füllstand im Behälter erreicht oder unterschritten ist.

Das Auswertegerät kann aus der von ihm bestimmten Frequenz auch gewisse Fehler der Füllstandsüberwachungsanordnung erkennen. Wenn die gemessene Frequenz Null ist, liegt ein Totalausfall des Geräts vor. Wenn die gemessene Frequenz wesentlich höher ist als die Nennfrequenz, besteht der Verdacht, daß die Schwingstäbe durch Korrosion oder Abriß verkürzt sind. In solchen Fällen kann das Auswertegerät ein Alarmsignal ausgeben; die Überwachung des Füllstands ist dann aber nicht mehr möglich, bis der Fehler behoben ist.

In zunehmendem Maße werden jedoch von der Öffentlichkeit und von den Technischen Überwachungsvereinen beim Umgang mit flüssigen Gefahrengütern in Lagertanks (z. B. Flüssiggas) selbstüberwachende Überfüllsicherungen mit erhöhter Eigensicherheit gefordert, die auch beim Auftreten eines Fehlers die weitere Füllstandsüberwachung ermöglichen.

Zur Erfüllung dieser Forderung ist eine Anordnung der eingangs angegebenen Art nach der Erfindung dadurch gekennzeichnet, daß ein zweiter Schaltungskanal vorgesehen ist, der in gleicher Weise wie der erste Schaltungskanal aufgebaut und mit den Erregungs- und Empfangswandlern des mechanischen Schwingsystems verbunden ist, daß eine steuerschaltung vorgesehen ist, die die beiden Schaltungskanäle abwechselnd aktiviert, und daß der Meßsignalwandler jedes Schaltungskanals so ausgebildet ist, daß er zu dem Meßsignal eine dem Schaltungskanal zugeordnete Kennung hinzufügt, die von der dem anderen Schaltungskanal zugeordneten Kennung verschieden ist.

In der Anordnung nach der Erfindung empfängt das Auswertegerät im regulären Betrieb abwechselnd die Meßsignale des einen und des anderen Schaltungskanals; diese Meßsignale enthalten die gleiche Information über die zu überwachende Frequenz und unterscheiden sich nur hinsichtlich der Kennung des Schaltungskanals, von dem das gerade empfangene Meßsignal stammt. Mit Hilfe der Kennungen kann das Auswertegerät jederzeit das einwandfreie Funktionieren der elektronischen Schaltungen des Füllstandssensors kontrollieren und beim Auftreten von Fehlern zusätzliche Informationen gewinnen. Wenn beispielsweise einer der beiden Schaltungskanäle ausfällt, entstehen Pausen in den übertragenen Meßsignalen, und aus den noch übertragenen Meßsignalen kann das Auswertegerät an Hand der Kennung erkennen, welcher der beiden Schaltungskanäle ausgefallen ist. Wenn dagegen Meßsignale lückenlos übertragen werden, jedoch die Kennung unverändert bleibt, erkennt das Auswertegerät, daß der regelmäßige Wechsel zwischen den Schaltungskanälen nicht mehr stattfindet. In jedem solchen Störungsfall löst das Auswertegerät einen Alarm aus, damit die Störung behoben wird, es kann jedoch die Überwachung des Füllstands inzwischen fortsetzen, solange es noch Meßsignale von einem der beiden Schaltungskanäle empfängt.

Vorteilhafte Ausgestaltungen und Weiterbildungen der Erfindung sind in den Unteransprüchen gekennzeichnet.

Weitere Merkmale und Vorteile der Erfindung ergeben sich aus der folgenden Beschreibung eines Ausführungsbeispiels an Hand der Zeichnungen. In den Zeichnungen zeigen:
- Fig. 1: das Blockschaltbild einer erfindungsgemäßen Anordnung zur Feststellung und/oder Überwachung eines vorbestimmten Füllstands in einem Behälter,
- Fig. 2: Zeitdiagramme von Signalen, die in der Anordnung von Fig. 1 vorkommen, und
- Fig. 3: das Blockschaltbild einer Ausführungsform eines der Meßsignalwandler in der Anordnung von Fig. 1.

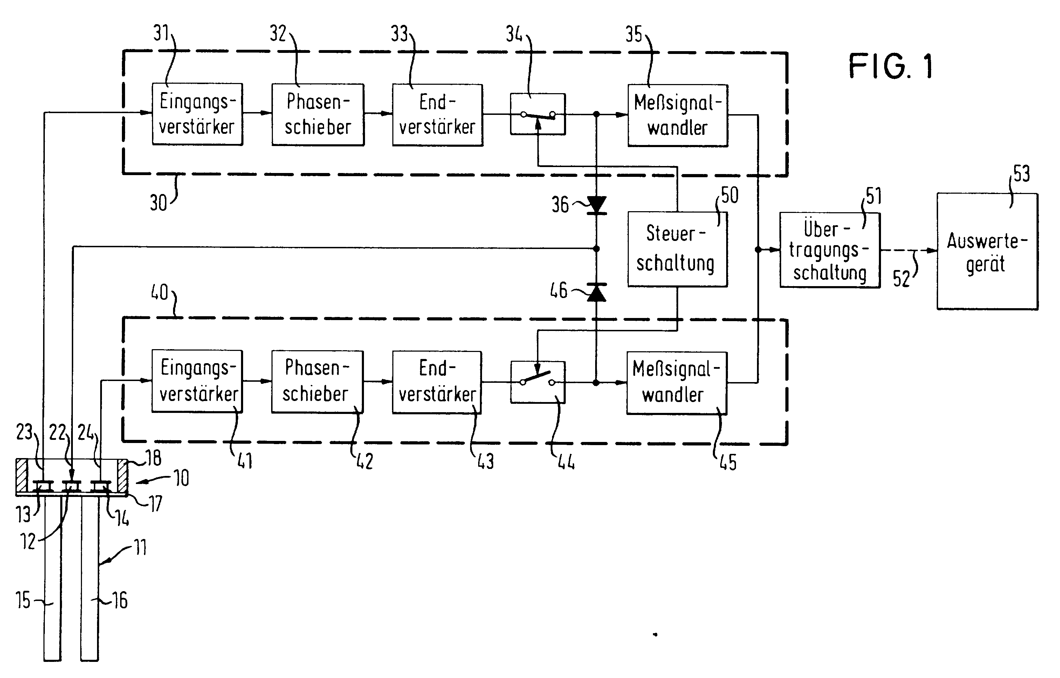

Fig. 1 der Zeichnung zeigt einen Füllstandssensor 10 mit einem mechanischen Schwingsystem 11, einem elektromechanischen Erregungswandler 12 und zwei elektromechanischen Empfangswandlern 13 und 14. Das mechanische Schwingsystem 11 besteht bei dem dargestellten Beispiel aus zwei Schwingstäben 15 und 16, die jeweils mit einem Ende an einer gemeinsamen Membran 17 befestigt sind, die rings um ihren Umfangsrand mit einem ringförmigen Einschraubstück 18 verbunden ist. Der elektromechanische Erregungswandler 12 ist so ausgebildet, daß er ein zugeführtes elektrisches Wechselsignal (Wechselspannung oder Wechselstrom) in eine mechanische Schwingung umwandeln kann, und jeder der beiden elektromechanischen Empfangswandler 13, 14 ist so ausgebildet, daß er eine auf ihn einwirkende mechanische Schwingung in ein elektrisches Wechselsignal umwandeln kann. Als Beispiel ist angenommen, daß jeder Wandler 12, 13, 14 ein piezoelektrischer Wandler ist, der wenigstens ein piezoelektrisches Element enthält. Ein solches piezoelektrisches Element besteht bekanntlich aus einem scheibenförmigen Piezokristall, der zwischen zwei Elektroden angeordnet ist. Die Dicke des Piezokristalls ändert sich in Abhängigkeit von der an die Elektroden angelegten Spannung, und umgekehrt erzeugen mechanisch erzwungene Dickenänderungen eine elektrische Spannung an den Elektroden. Der Erregungswandler 12 ist so mit der Membran 17 verbunden, daß er aufgrund der Dickenschwingungen seines Piezokristalls, die beim Anlegen einer elektrischen Wechselspannung erzeugt werden, die Membran in Schwingungen versetzt, die auf die beiden Schwingstäbe übertragen werden, so daß diese Schwingstäbe gegensinnige mechanische Schwingungen quer zu ihrer Längsrichtung ausführen. Jeder Empfangswandler 13, 14 ist so mit der Membran 17 verbunden, daß aufgrund der mechanischen Schwingungen der Membran und der Schwingstäbe eine elektrische Wechselspannung zwischen seinen beiden Elektroden erzeugt wird.

Jeweils eine Elektrode jedes der drei Wandler 12, 13 und 14 ist mit einem Masseanschluß verbunden, der beispielsweise durch die Membran 17 und das Einschraubstück 18 gebildet sein kann. Die anderen Elektroden bilden einen Anschluß 22 für den Erregungswandler 12, einen Anschluß 23 für den Empfangswandler 13 bzw. einen Anschluß 24 für den Empfangswandler 14. Der Anschluß 23 des Empfangswandlers 13 ist mit dem Eingang eines Schaltungskanals 30 verbunden, der hintereinander einen Eingangsverstärker 31, einen Phasenschieber 32, einen Endverstärker 33, einen Kanalschalter 34 und einen Meßsignalwandler 35 enthält. Der Anschluß 22 des Erregungswandlers 12 ist über eine Diode 36 an den Ausgang des Kanalschalters 34 angeschlossen. Desgleichen ist der Anschluß 24 des Empfangswandlers 14 mit dem Eingang eines Schaltungskanals 40 verbunden, der in völlig gleicher Weise wie der Schaltungskanal 30 ausgebildet ist und somit hintereinander einen Eingangsverstärker 41, einen Phasenschieber 42, einen Endverstärker 43, einen Kanalschalter 44 und einen Meßsignalwandler 45 enthält, wobei der Anschluß 22 des Erregungswandlers 12 über eine Diode 46 an den Ausgang des Kanalschalters 44 angeschlossen ist. Eine Steuerschaltung 50 legt an die beiden Kanalschalter 34 und 44 zueinander komplementäre Steuersignale an, so daß der Kanalschalter 44 offen ist, wenn der Kanalschalter 34 geschlossen ist, und umgekehrt. Diese Steuersignale sind vorzugsweise periodisch und symmetrisch, so daß jeder Kanalschalter abwechselnd für gleiche Zeiten offen und geschlossen ist. Die Periode der Steuersignale kann beispielsweise 1 Hz betragen, so daß jeder Kanalschalter abwechselnd für 0,5 s offen und für 0,5 s geschlossen ist. Die Kanalschalter 34 und 44, die symbolisch durch mechanische Schaltkontakte dargestellt sind, sind natürlich in Wirklichkeit schnelle elektronische Schalter, die beispielsweise in CMOS-Technologie ausgebildet sind.

Wenn der Kanalschalter 34 geschlossen ist, liegt der Füllstandssensor 10 mit den beiden Wandlern 12 und 13, die über das mechanische Schwingsystem 11 miteinander gekoppelt sind, im Rückkopplungskreis der Verstärkerschaltung des Schaltungskanals 30, die durch die Schaltungen 31, 32 und 33 gebildet ist. Diese Verstärkerschaltung ist so ausgebildet, daß die Selbsterregungsbedingung erfüllt ist, so daß das mechanische Schwingsystem 11 über die beiden Wandler 12 und 13 zu Schwingungen mit seiner Eigenresonanzfrequenz angeregt wird. Wenn dagegen der Kanalschalter 44 geschlossen ist, liegt der Füllstandssensor 10 mit den beiden Wandlern 12 und 14, die über das mechanische Schwingsystem 11 miteinander gekoppelt sind, im Rückkopplungskreis der Verstärkerschaltung des Schaltungskanals 40, die durch die Schaltungen 41, 42 und 43 gebildet ist. Auch diese Verstärkerschaltung ist so ausgebildet, daß die Selbsterregungsbedingung erfüllt ist, so daß das mechanische Schwingsystem 11 über die beiden Wandler 12 und 14 zu Schwingungen mit seiner Eigenresonanzfrequenz angeregt wird.

Zur Feststellung, ob ein Füllgut in einem Behälter einen vorbestimmten Füllstand erreicht hat, wird der Füllstandssensor 10 in bekannter Weise an dem Behälter so angebracht, daß die beiden Schwingstäbe 15 und 16 mit dem Füllgut in Berührung kommen, wenn dieses den vorbestimmten Füllstand erreicht. Wenn der vorbestimmte Füllstand im Behälter nicht erreicht ist, schwingen die beiden Schwingstäbe 15 und 16 in Luft. In diesem Fall hat die Eigenresonanzfrequenz des mechanischen Schwingsystems 11 einen bekannten Wert, der beispielsweise 450 Hz betragen kann. Wenn dagegen die beiden Schwingstäbe 15 und 16 mit dem Füllgut in Berührung kommen, nimmt die Eigenresonanzfrequenz des mechanischen Schwingsystems ab; sie beträgt beispielsweise bei einem Füllgut großer Dichte oder großer Viskosität etwa 100 Hz, wenn die beiden Schwingstäbe vollständig von dem Füllgut bedeckt sind. An Hand der Frequenz des Ausgangssignals des Endverstärkers 33 bzw. 43, die ja stets mit der Schwingungsfrequenz des mechanischen Schwingsystems 11 übereinstimmt, kann dann festgestellt werden, ob das Füllgut im Behälter den vorbestimmten Füllstand erreicht hat oder nicht.

Der Meßsignalwandler 35, der das Ausgangssignal des Endverstärkers 33 empfängt, wenn der Kanalschalter 34 geschlossen ist, liefert am Ausgang ein Meßsignal, das die Information über die Schwingungsfrequenz des mechanischen Schwingsystems 11 enthält. Ein Meßsignal, das die gleiche Information enthält, wird vom Ausgang des Meßsignalwandlers 45 geliefert, wenn der Kanalschalter 44 geschlossen ist. Die Ausgänge der beiden Meßsignalwandler 35 und 45 sind mit den Eingängen einer Übertragungsschaltung 51 verbunden, deren Ausgang über eine Leitung 52 mit einem Auswertegerät 53 verbunden ist, das an entfernter Stelle angeordnet sein kann, während die übrigen in Fig. 1 dargestellten Schaltungen die Vorortelektronik bilden, die am Ort des Behälters angeordnet ist, dessen Füllstand mit Hilfe des Füllstandssensors 10 überwacht wird. Somit empfängt das Auswertegerät 53 das von dem Meßsignalwandler 35 erzeugte Meßsignal, wenn der Kanalschalter 34 geschlossen ist, während der Meßsignalwandler 45 dann kein Meßsignal erzeugt, da der Kanalschalter 44 offen ist und die Diode 46 verhindert, daß das Ausgangssignal des Endverstärkers 33 zum Meßsignalwandler 45 gelangt; dagegen empfängt das Auswertegerät 53 das von dem Meßsignalwandler 45 erzeugte Meßsignal, wenn der Kanalschalter 44 geschlossen ist, während der Meßsignalwandler 35 dann kein Meßsignal erzeugt, weil der Kanalschalter 34 offen ist und die Diode 36 verhindert, daß das Ausgangssignal des Endverstärkers 43 zum Meßsignalwandler 35 gelangt. Aus jedem empfangenen Meßsignal kann das Auswertegerät 53 die Schwingungsfrequenz des mechanischen Schwingsystems 11 ermitteln und daraus feststellen, ob der zu überwachende Füllstand im Behälter erreicht ist oder nicht.

Einer üblichen Praxis entsprechend ist die Leitung 52 eine Zweidrahtleitung, über die einerseits der Versorgungsstrom vom Auswertegerät 53 zu der am Ort des Füllstandssensors 10 befindlichen Vorortelektronik geliefert wird, und über die andrerseits die Meßsignale von der Vorortelektronik zum Auswertegerät 53 übertragen werden. Die Meßsignalwandler 35 und 45 sind daher so ausgebildet, daß sie Meßsignale erzeugen, die dem über die Leitung 52 übertragenen Versorgungsstrom überlagert werden können. Dies kann auf eine bekannte Weise dadurch geschehen, daß die Meßsignale Impulse sind, die mit der Information über die Schwingungsfrequenz des mechanischen Schwingsystems 11 moduliert sind. Vorzugsweise ist die den Impulsen erteilte Modulation eine Pulsfrequenzmodulation (PFM), so daß die über die Leitung 52 zum Auswertegerät 53 übertragenen Impulse eine Folgefrequenz haben, die gleich der Schwingungsfrequenz des mechanischen Schwingsystems 11 ist oder in einem bekannten Verhältnis zu dieser Schwingungsfrequenz steht. Die Übertragungsschaltung 51 ist in an sich bekannter Weise so ausgebildet, daß sie die PFM-Impulse dem Versorgungsstrom auf der Leitung 52 überlagert, und das Auswertegerät 53 ist so ausgebildet, daß es die überlagerten PFM-Impulse wieder von dem Versorgungsstrom trennt.

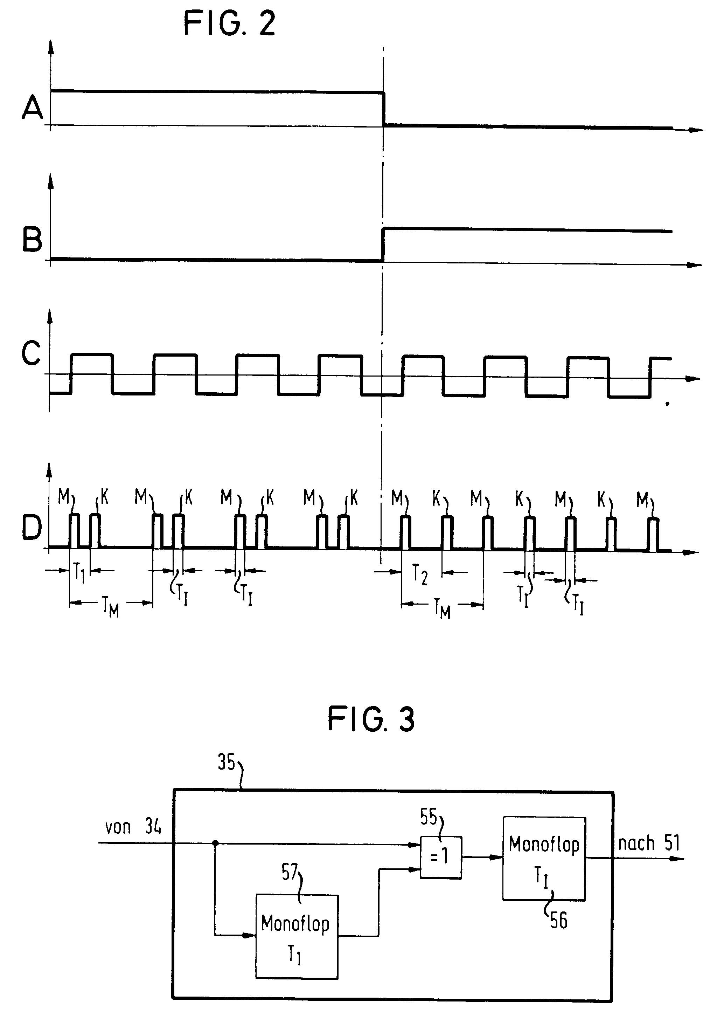

Eine Besonderheit der hier beschriebenen Anordnung besteht nicht nur darin, daß zwei gleiche Schaltungskanäle 30 und 40 vorgesehen sind, die abwechselnd durch Schließen des zugehörigen Kanalschalters 34 bzw. 44 aktiviert werden, sondern auch darin, daß jeder Meßsignalwandler 35 bzw. 45 dem von ihm erzeugten Meßsignal eine Kennung hinzufügt, die den Schaltungskanal kennzeichnet und von der Kennung des anderen Schaltungskanals verschieden ist, so daß das Auswertegerät 53 erkennen kann, von welchem Schaltungskanal das Meßsignal stammt, das es gerade empfängt. In den Diagrammen von Fig. 2 ist dargestellt, wie die Kennungen in dem Fall gebildet sein können, daß die Meßsignale PFM-Impulse sind.

Das Diagramm A von Fig. 2 zeigt das Steuersignal, das von der Steuerschaltung 50 an den Kanalschalter 34 angelegt wird, und das Diagramm B zeigt das dazu komplementäre Steuersignal, das an den Kanalschalter 44 angelegt wird. Jeder Kanalschalter ist geschlossen, wenn das angelegte Steuersignal den hohen Signalwert hat, und er ist offen, wenn das angelegte Steuersignal den niedrigen Signalwert hat. Somit entsprechen in Fig. 2 die links von der strichpunktierten Linie dargestellten Diagramme dem Zustand, in dem der Schaltungskanal 30 aktiviert ist, und die im rechten Teil dargestellten Diagramme entsprechen dem Zustand, in dem der Schaltungskanal 40 aktiviert ist.

Das Diagramm C von Fig. 2 zeigt die Ausgangssignale der Endverstärker 33 bzw. 43 im jeweils aktivierten Schaltungskanal; diese Ausgangssignale sind identisch. Der üblichen Praxis entsprechend ist angenommen, daß die Endverstärker 33 und 43 Begrenzerverstärker sind, die am Ausgang Rechteckspannungen abgeben, deren Frequenz gleich der Schwingungsfrequenz des mechanischen Schwingsystems 11 ist. Jeder Meßsignalwandler 35 und 45 erzeugt für jede ansteigende Flanke der Rechteckspannung einen kurzen Meßimpuls M der Dauer T_{I}; die Folgefrequenz dieser Meßimpulse M ist somit gleich der Schwingungsfrequenz des mechanischen Schwingsystems 11. Zusätzlich erzeugt der Meßsignalwandler 35 in jeder Periode T_{M} der Meßimpulse M einen kurzen Kennungsimpuls K, der in einem festen Zeitabstand T₁ auf den Meßimpuls M folgt und vorzugsweise die gleiche Dauer T_{I} hat; in gleicher Weise erzeugt der Meßsignalwandler 45 in jeder Periode der Meßimpulse M einen kurzen Kennungsimpuls K der Dauer T_{I}, der in einem festen Zeitabstand T₂ auf den Meßimpuls M folgt, wobei der Zeitabstand T₂ von dem Zeitabstand T₁ verschieden ist. Somit ist aus den Zeitabständen T₁ und T₂ erkennbar, von welchem Schaltungskanal die Meßsignale stammen. Der Zeitabstand T₁ bildet die Kennung für den Schaltungskanal 30, und der Zeitabstand T₂ bildet die Kennung für den Schaltungskanal 40.

Die Zeitabstände T₁ und T₂ müssen natürlich kürzer als die kürzeste Periode T_{M} sein, die im normalen Betrieb des Füllstandssensors 10 vorkommen kann; bei den oben angegebenen Eigenresonanzfrequenzen des mechanischen Schwingungssystems 11 zwischen 100 und 450 Hz liegen die entsprechenden Perioden T_{M} zwischen etwa 10000 und 2200 µs. Man wählt dann beispielsweise Zeitabstände T₁ = 470 µs und T₂ = 880 µs.

Fig. 3 zeigt ein Ausführungsbeispiel des Meßsignalwandlers 35, mit dem die zuvor geschilderten Meß- und Kennungsimpulse erzeugt werden können. Das vom Endverstärker 33 gelieferte und über den geschlossenen Kanalschalter 34 übertragene Rechtecksignal wird über eine EXCLUSIV-ODER-Schaltung 55 an ein Monoflop 56 angelegt, das durch jede ansteigende Flanke des Rechtecksignals ausgelöst wird und einen Meßimpuls M der Dauer T_{I} erzeugt. Das gleiche Rechtecksignal wird auch an ein zweites Monoflop 57 angelegt, dessen Haltezeit gleich dem Zeitabstand T₁ für die Kennung des Schaltungskanals 30 ist. Somit erzeugt das Monoflop 57 nach jeder Auslösung einen Rechteckimpuls der Dauer T₁, der über den zweiten Eingang der EXCLUSIV-ODER-Schaltung 55 dem Monoflop 56 zugeführt wird, das durch die Hinterflanke dieses Rechteckimpulses erneut ausgelöst wird und einen Kennungsimpuls K der Dauer T_{I} erzeugt, der im Zeitabstand T₁ auf den zuvor erzeugten Meßimpuls M folgt. Der Meßsignalwandler 45 des zweiten Schaltungskanals 40 ist in gleicher Weise aufgebaut, jedoch mit dem Unterschied, daß die Haltezeit des zweiten Monoflops auf den Zeitabstand T₂ eingestellt ist.

Die Bestimmung der Schwingungsfrequenz des mechanischen Schwingsystems 11 im Auswertegerät 53 wird durch die zusätzlichen Kennungsimpulse in keiner Weise beeinträchtigt. Wenn die Bestimmung der Schwingungsfrequenz durch Zählung der Impulse des Meßsignals in vorgegebenen Zeitintervallen erfolgt, ergibt sich infolge der Kennungsimpulse lediglich die doppelte Impulszahl pro Zeitintervall, was bei der Berechnung der Schwingungsfrequenz leicht berücksichtigt werden kann. Wenn dagegen die Bestimmung der Schwingungsfrequenz durch Messung der Folgeperiode T_{M} der Meßimpulse erfolgt, kann diese Folgeperiode leicht dadurch erhalten werden, daß jeweils zwei aufeinanderfolgende Zeitabstände zwischen Impulsen gemessen und diese Zeitabstände addiert werden, da einer dieser Zeitabstände der Zeitabstand T₁ bzw. T₂ zwischen einem Meßimpuls M und dem folgenden Kennungsimpuls K und der andere Zeitabstand derjenige zwischen einem Kennungsimpuls K und dem folgenden Meßimpuls M ist.

Mit Hilfe der Kennungen kann das Auswertegerät 53 jederzeit das einwandfreie Funktionieren der Vorortelektronik kontrollieren und beim Auftreten von Fehlern zusätzliche Informationen gewinnen. Wenn beispielsweise einer der beiden Schaltungskanäle 30, 40 ausfällt, entstehen Pausen von jeweils 0,5 s in den übertragenen Meßsignalen, und aus den noch übertragenen Meßsignalen kann das Auswertegerät 53 an Hand der Kennung erkennen, welcher der beiden Schaltungskanäle ausgefallen ist. Wenn dagegen Meßsignale lückenlos übertragen werden, jedoch die Kennung unverändert bleibt, erkennt das Auswertegerät 53, daß der regelmäßige Wechsel zwischen den Schaltungskanälen nicht mehr stattfindet, was insbesondere auf einen Ausfall der Steuerschaltung 50 schließen läßt. In jedem solchen Störungsfall löst das Auswertegerät einen Alarm aus, damit die Störung behoben wird, sie kann jedoch die Überwachung des Füllstands inzwischen fortsetzen, solange sie noch Meßsignale von einem der beiden Schaltungskanäle empfängt.

Es ist nicht unbedingt erforderlich, daß das mechanische Schwingsystem 11 zwei Empfangswandler 13, 14 enthält, von denen der eine Empfangswandler 13 mit dem einen Schaltungskanal 30 und der andere Empfangswandler mit dem anderen Schaltungskanal 40 verbunden ist. Grundsätzlich würde die Anordnung auch mit einem einzigen Empfangswandler funktionieren, an den beide Schaltungskanäle angeschlossen wären; die Verwendung von zwei Empfangswandlern ermöglicht aber eine bessere gegenseitige Entkopplung der Schaltungskanäle.

Desgleichen ist die beschriebene Anordnung nicht auf die Verwendung von mechanischen Schwingsystemen mit zwei Schwingstäben beschränkt; sie kann auch mit Füllstandssensoren ausgestattet werden, die nur einen Schwingstab aufweisen, oder auch mit Füllstandssensoren ohne Schwingstäbe, bei denen nur die schwingende Membran mit dem Füllgut in Kontakt kommt.

Die zuvor beschriebene Übertragung von PFM-Meßsignalen entspricht einer bevorzugten Technik, weil die zu messende Frequenz unmittelbar durch die Folgefrequenz der PFM-Impulse ausgedrückt werden kann und weil die PFM-Impulse auf besonders einfache Weise dem Versorgungsgleichstrom auf der Zweidrahtleitung überlagert werden können. Für die Erfindung erweist sich diese Technik als besonders günstig, weil sie auf einfache Weise die Einfügung der Kennung in das Meßsignal in Form des Zeitabstands von Kennungsimpulsen ermöglicht. Grundsätzlich kann aber das beschriebene Prinzip auch bei anderen Arten von Meßsignalen angewendet werden, vorausgesetzt, daß diesen eine den Schaltungskanal identifizierende Kennung hinzugefügt werden kann.

## Patentansprüche

1. Anordnung zur Feststellung und/oder Überwachung eines vorbestimmten Füllstands in einem Behälter mit Hilfe eines Füllstandssensors, der ein mechanisches Schwingsystem, einen elektromechanischen Erregungswandler und wenigstens einen elektromechanischen Empfangswandler enthält, wobei das mechanische Schwingsystem auf der Höhe des vorbestimmten Füllstands so angebracht ist, daß es mit dem Füllgut in Berührung kommt, wenn dieses den vorbestimmten Füllstand erreicht, und wobei der Empfangswandler mit dem Eingang eines ersten Schaltungskanals verbunden ist, der eine Verstärkerschaltung enthält, deren Ausgang mit dem Erregungswandler verbunden ist und die so ausgebildet ist, daß das mechanische Schwingsystem zu Schwingungen mit seiner Eigenresonanzfrequenz erregt wird, und mit einem Auswertegerät zur Auslösung von Anzeige- und/oder Schaltvorgängen in Abhängigkeit von der Frequenz des Ausgangssignals der Verstärkerschaltung, wobei der erste Schaltungskanal ferner einen Meßsignalwandler enthält, der ein zur Übertragung zu dem Auswertegerät geeignetes Meßsignal erzeugt, das die Information über die Frequenz des Ausgangssignals der Verstärkerschaltung enthält, dadurch gekennzeichnet, daß ein zweiter Schaltungskanal vorgesehen ist, der in gleicher Weise wie der erste Schaltungskanal aufgebaut und mit den Erregungs- und Empfangswandlern des mechanischen Schwingsystems verbunden ist, daß eine Steuerschaltung vorgesehen ist, die die beiden Schaltungskanäle abwechselnd aktiviert, und daß der Meßsignalwandler jedes Schaltungskanals so ausgebildet ist, daß er zu dem Meßsignal eine dem Schaltungskanal zugeordnete Kennung hinzufügt, die von der dem anderen Schaltungskanal zugeordneten Kennung verschieden ist.

2. Anordnung nach Anspruch 1, dadurch gekennzeichnet, daß jeder Schaltungskanal einen Kanalschalter enthält und daß die Steuerschaltung die Kanalschalter der beiden Schaltungskanäle wechselweise öffnet und schließt.

3. Anordnung nach Anspruch 1 oder 2, dadurch gekennzeichnet, daß das mechanische Schwingsystem zwei Empfangswandler aufweist, von denen der eine Empfangswandler mit dem Eingang des einen Schaltungskanals und der andere Empfangswandler mit dem Eingang des anderen Schaltungskanals verbunden ist.

4. Anordnung nach einem der vorhergehenden Ansprüche, dadurch gekennzeichnet, daß jeder Meßsignalwandler ein pulsfrequenzmoduliertes Meßsignal erzeugt, das aus einer periodischen Folge von kurzen Meßimpulsen besteht, deren Folgefrequenz in einem bekannten Verhältnis zu der Frequenz des Ausgangssignals der Verstärkerschaltung steht, und daß jeder Meßsignalwandler in jeder Periode des Meßsignals einen kurzen Kennungsimpuls erzeugt, der in einem vorbestimmten Zeitabstand auf den vorangehenden Meßimpuls folgt, wobei die Zeitabstände in den beiden Schaltungskanälen voneinander verschieden sind und die Kennungen der Schaltungskanäle darstellen.

## Claims

1. A device for determining and/or monitoring a predetermined material level in a container with the help of a material level sensor which contains a mechanical oscillatory structure, an electromechanical excitation transducer and at least one electromechanical reception transducer, the mechanical oscillatory structure being secured at the height of the predetermined material level in such a way that it comes into contact with the material when said material reaches the predetermined material level, and the reception transducer being connected to the input of a first circuit channel, which contains an amplifier circuit whose output is connected to the excitation transducer and which is designed in such a way that the mechanical oscillatory structure is excited to oscillations with its natural resonance frequency, and to an evaluation device for initiating display and/or switching operations in accordance with the frequency of the output signal of the amplifier circuit, with the first circuit channel also containing a measuring signal transducer, which produces a measuring signal suitable for transmission to the evaluation device, said signal containing information about the frequency of the output signal of the amplifier circuit, characterised in that a second circuit channel is provided, which is constructed in the same manner as the first circuit channel and which is connected to the excitation and reception transducers of the mechanical oscillatory structure, that a control circuit is provided to activate the two circuit channels alternately, and that the measuring signal transducer of each circuit channel is designed in such a way that it adds to the measuring signal an identifier which is assigned to the respective circuit channel and which is different from the identifier assigned to the other circuit channel.

2. A device according to claim 1, characterised in that each circuit channel contains a channel switch and that the control circuit alternately opens and closes the channel switches of the two circuit channels.

3. A device according to claim 1 or claim 2, characterised in that the mechanical oscillatory structure has two reception transducers, of which one reception transducer is connected to the input of one circuit channel and the other reception transducer is connected to the input of the other circuit channel.

4. A device according to any one of the preceding claims, characterised in that each measuring signal transducer produces a pulse-frequency modulated measuring signal consisting of a periodic sequence of short measuring pulses, the repetition rate of which bears a known ratio to the frequency of the output signal of the amplifier circuit, and in that each measuring signal transducer produces in each period of the measuring signal a short identifier pulse which follows the preceding measuring pulse at a predetermined interval, with the intervals in the two circuit channels being different from each other and representing the identifiers of the circuit channels.

## Revendications

1. Dispositif pour la détermination et/ou la surveillance d'un niveau de remplissage prédéterminé dans un récipient à l'aide d'une sonde de niveau de remplissage qui comprend un système à vibration mécanique, un convertisseur d'excitation électromécanique et au moins un convertisseur de réception électromécanique, le système oscillant mécanique étant placé à la hauteur du niveau de remplissage prédéterminé de manière à venir en contact avec la charge quand celle-ci atteint le niveau de remplissage prédéterminé et le convertisseur de réception étant relié à l'entrée d'un premier canal de circuit qui contient un montage amplificateur dont la sortie est reliée au convertisseur d'excitation et qui est conçu de manière à exciter le système mécanique oscillant pour qu'il effectue des oscillations avec une fréquence de résonance propre, et est reliée à un appareil d'évaluation pour le déclenchement d'opérations d'affichage et/ou de commande en fonction de la fréquence du signal de sortie du montage amplificateur, le premier canal de circuit comprenant en outre un convertisseur de signal de mesure qui génère son propre signal de mesure pour la transmission à l'appareil d'évaluation, signal qui contient l'information sur la fréquence du signal de sortie du montage amplificateur, caractérisé en ce qu'il est prévu un second canal de circuit qui est réalisé de la même manière que le premier canal de circuit et qui est relié aux convertisseurs de réception et d'excitation du système mécanique oscillant, en ce qu'il est prévu un circuit de commande qui active en alternance les deux canaux de circuit et en ce que le convertisseur de signal de mesure de chaque canal de circuit est conçu pour ajouter au signal de mesure une indication caractéristique associée au canal de circuit qui est différente de l'indication caractéristique associée à l'autre canal de circuit.

2. Dispositif selon la revendication 1, caractérisé en ce que chaque canal de circuit comprend un interrupteur de canal et en ce que le circuit de commande ouvre et ferme en alternance les interrupteurs des deux canaux de circuit.

3. Dispositif selon la revendication 1 ou 2, caractérisé en ce que le système mécanique oscillant présente deux convertisseurs de réception dont l'un est relié à l'entrée de l'un des canaux de circuit et l'autre à l'entrée de l'autre canal de circuit.

4. Dispositif selon l'une des revendications précédentes, caractérisé en ce que chaque convertisseur de signal de mesure génère un signal de mesure à modulation d'impulsions en fréquence qui se compose d'une suite périodique de courtes impulsions de mesure dont la fréquence en série se trouve dans un rapport connu vis-à-vis de la fréquence du signal de sortie du montage amplificateur et en ce que chaque convertisseur de signaux de mesure génère dans chaque période du signal de mesure une impulsion courte d'indication caractéristique qui suit l'impulsion de mesure précédente à un intervalle de temps prédéterminé, les intervalles de temps étant différents les uns des autres dans les deux canaux de circuit et représentant les indications caractéristiques des canaux de circuit.
